(19) Europäisches Patentamt
European Patent Office
Office européen des brevets

(11) Veröffentlichungsnummer : **0 457 091 B1**

# (12) EUROPÄISCHE PATENTSCHRIFT

(45) Veröffentlichungstag der Patentschrift : **02.02.94 Patentblatt 94/05**

(51) Int. Cl.$^5$ : **C08L 77/00,** C08L 31/02

(21) Anmeldenummer : **91106963.1**

(22) Anmeldetag : **30.04.91**

## (54) Mischungen aus Polyamiden und speziellen phenolgruppenhaltigen Polymerisaten.

(30) Priorität : **12.05.90 DE 4015298**

(43) Veröffentlichungstag der Anmeldung : **21.11.91 Patentblatt 91/47**

(45) Bekanntmachung des Hinweises auf die Patenterteilung : **02.02.94 Patentblatt 94/05**

(84) Benannte Vertragsstaaten : **DE FR GB IT**

(56) Entgegenhaltungen :
**EP-A- 0 036 301**
**EP-A- 0 147 609**

(73) Patentinhaber : **BAYER AG**
**D-51368 Leverkusen (DE)**

(72) Erfinder : **Lütjens, Holger, Dr.**
**Rybniker Strasse 12**
**W-5000 Köln 80 (DE)**
Erfinder : **Piejko, Karl-Erwin, Dr.**
**Unterscheider Weg 7a**
**W-5060 Bergisch Gladbach 2 (DE)**
Erfinder : **Plaetschke, Rüdiger, Dr.**
**Am Thelenhof 18**
**W-5090 Leverkusen (DE)**

EP 0 457 091 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft verträgliche Polymermischungen aus einem Polyamid und einem speziellen Vinylmonomerisat, enthaltend einpolymerisierte Struktureinheiten vom Bisphenolderivat-Typ. Die neuen Mischungen eignen sich zur Herstellung von Thermoplastformmassen.

Thermoplastische Polyamide stellen gebräuchliche Rohstoffe für diverse Kunststoffartikel des Marktes dar. Für bestimmte moderne Einsatzgebiete besteht die Forderung, gewisse Eigenschaften solcher Polyamidformmassen zu verbessern. Beispielsweise möchte man einerseits die Hydrophilie der Polyamide beeinflussen, so daß sie z.B. bei Gebrauch weniger Wasser aufnehmen und eine verbesserte Dimensionsstabilität aufweisen, andererseits möchte man für bestimmte Einsatzgebiete die praktische Wärmeformbeständigkeit der Polyamidformmassen verbessern und/oder die Elastizität erhöhen.

Bekannt sind verschiedene Möglichkeiten der Verringerung der Wasseraufnahmefähigkeit von Polyamiden wie z.B. der Zusatz bekannter niedermolekularer Polyamid-Weichmacher. Nachteil dieser Additive ist ihr Mangel an Migrationsbeständigkeit sowie ihre zu große Flüchtigkeit. Die Wärmeformbeständigkeit von Polyamiden läßt sich z.B. durch Zusatz von Polymeren verbessern, die eine höhere Glastemperatur als Polyamide aufweisen. Voraussetzung für eine derartige Vorgehensweise ist allerdings eine ausreichende Verträglichkeit bzw. Ankopplung zwischen den polymeren Komponenten. Die Einstellung bestimmter Verträglichkeiten gegenüber Polyamid wird bekannterweise dadurch erreicht, daß man Polymere verwendet, die gegenüber Polyamid chemisch reaktive Gruppen eingebaut enthalten. Solche Gruppen, wie z.B. Anhydrid- oder Carbonsäuregruppen, führen zu einer Reaktion mit Polyamid und fördern bekanntermaßen die Verträglichkeit. Nachteile solcher Formmassen können sein: Beeinträchtigung der Fließfähigkeit, Verarbeitungsbreite im Schmelzzustand, Stippenanfälligkeit sowie Abbauerscheinung der Polyamide.

Es wurde nun gefunden, daß bestimmte Vinylpolymere mit speziellen Struktureinheiten einerseits mit Polyamiden gute Verträglichkeit aufweisen und andererseits praxisrelevante Eigenschaften thermoplastischer Polyamide verbessern wie z.B. Wasseraufnahmevermögen in Korrelation mit Veränderung physikalischer Eigenschaften, Wärmeformbeständigkeit bzw. Elastizität - je nach chemischer Gesamtstruktur des dem Polyamid zugemischten Polymeren B). Gegenüber bekannten Formmassen zeichnen sich die neuen Mischungen durch Migrationsbeständigkeit, niedrigen Gehalt an flüchtigen Komponenten, besseres Fließ- und Verarbeitungsverhalten und hohe Alterungsbeständigkeit aus.

Gegenstand der Erfindung sind somit verträgliche Polymermischungen aus

A) 10 - 99 Gew.-Tl., vorzugsweise 20 - 95 Gew.-Tl. eines thermoplastischen Polyamids und

B) 1 - 90 Gew.-Tl., vorzugsweise 5 - 80 Gew.-Tl eines Vinylmonomerpolymerisats, enthaltend Struktureinheiten der Formel (I),

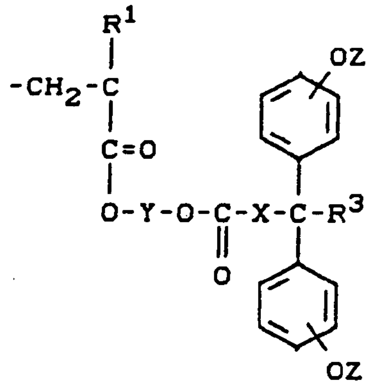

(I),

worin

R¹ = Wasserstoff, $C_1$-$C_4$-Alkyl,
R² = $C_1$-$C_{12}$-Alkyl, (primär, sekundär oder tertiär)
R³ = $C_1$-$C_{12}$-Alkyl, (primär, sekundär oder tertiär)
X = $C_1$-$C_{12}$-Alkylen,
Y = $C_1$-$C_{12}$-Alkylen,
Z = Wasserstoff,

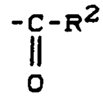

bedeuten,

Insbesondere geeignete Struktureinheiten (I) sind solche mit

$R^1$ = $CH_3$
$R^3$ = $CH_3$
X = $-(CH_2)_2-$, Y = $-(CH_2)_2-$ und Z = H

Zum Aufbau der Polymerisate B) geeignete Monomere sind z.T. bekannt und besitzen die Struktur

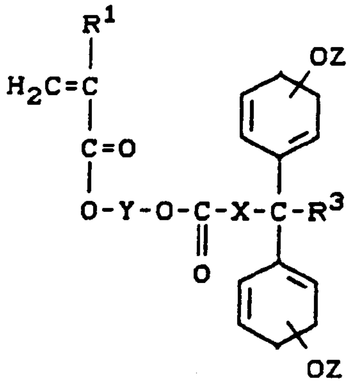

(II),

worin

$R^1$, $R^2$, $R^3$, X, Y und Z die oben genannte Bedeutung haben. Erfindungsgemäß geeignete Polymerisate B) sind entweder Homopolymerisate, bestehend aus Struktureinheiten der Formel (I), oder Polymerisate, bestehend aus copolymerisierten Einheiten der Monomere (II), und wenigstens einem Monomer aus der Reihe der ethylenisch ungesättigten copolymerisierbaren Verbindungen, insbesondere aus der Reihe der Styrole (α-Methylstyrol, p-Methylsryrol, Halogenstyrol, Methoxystyrol), der Acrylnitrile (Acrylnitril, Methacrylnitril), der Acrylate oder Methacrylate (insbesondere $C_1$-$C_8$-Alkyl(meth)-acrylate), Maleinimide, Maleinsäureanhydride, Acrylsäure, Methacrylsäure, Vinylether, Ethylen, Propylen, Butadien, Chloropren.

Die erfindungsgemäß geeigneten Polymerisate B) sind in organischen Medien lösliche, linear bis schwach vernetzt aufgebaute Polymere, vorzugsweise mit Molekulargewichten Mw (Gewichtsmittel) bis zu 500.000, insbesondere von 10.000 bis 100.000 (durch Lichtstreuung oder Sedimentation ermittelt).

Die erfindungsgemäß geeigneten Polymerisate B) können in an sich bekannter Weise durch Polymerisation aus den Bisphenolderivaten der Formel (II) und gegebenenfalls den oben genannten Comonomeren hergestellt werden. Die Polymerisation wird bevorzugt als Lösungs-, Suspensions- oder Emulsionspolymerisation und bevorzugt in Gegenwart radikalischer Initiatoren durchgeführt. Geeignete radikalische Initiatoren sind beispielsweise azogruppenhaltige Verbindungen wie Azoisobutyrodinitril, 4,4-Azobis(4-cyanovaleriansäure), organische Peroxide wie Benzoylperoxid, tert.-Butylhydroperoxid, Dibenzoylperoxid und anorganische Peroxidsalze wie Kaliumperoxodisulfat, Ammoniumperoxodisulfat.

Wird die Polymerisation in Lösung vorgenommen, können Lösungsmittel verwendet werden, in denen nur die Monomere löslich sind oder solche, in denen die Monomere und die Polymerisate löslich sind. Geeignete organische Lösungsmittel sind beispielsweise Butanol, Methylethylketon, Ethylbenzol.

Wird die Polymerisation in (wäßriger) Emulsion durchgeführt, werden die Monomere zweckmäßig mit Hilfe von Emulgatoren, z.B. anionaktiven, kationaktien oder nichtionogenen Emulgatoren emulgiert, beispielsweise mit Natrium-, Kalium-, Ammonium-Salzen von Fettsäuren, Natriumlaurylsulfat, Natriumsalz von $C_{14}$-$C_{18}$-Alkylsulfonsäuren, Oleyl- oder Octadecylalkohol.

Polymerisiert wird vorteilhaft bei erhöhter Temperatur, z.B. bei +30 bis +90°C, insbesondere bei +60 bis +85°C.

Zur Polymerisation sind in den Bisphenolderivaten der Formel (II) die Reste Z bevorzugt gleich

$$-\overset{\overset{\displaystyle O}{\|}}{C}-R^2,$$

wobei diese Reste auch während der Polymerisation erhalten bleiben; freie Phenolgruppen können die Polymerisation inhibieren. Man sollte auch bei der Emulsionspolymerisation stark saures (pH < 1) und stark alkalisches (pH > 12) Milieu bei höheren Temperaturen vermeiden. Bevorzugt wird die Polymerisation in schwach saurem oder neutralem Milieu durchgeführt.

Durch Basen können die Reste

$$Z = -\overset{\overset{\displaystyle O}{\|}}{C}-R^2$$

in den erfindungsgemäßen geeigneten Polymerisaten B) hydrolysiert werden, so daß Struktureinheiten der Formel (I) mit Z = H entstehen.

Zur Hydrolyse kann man beispielsweise zunächst ohne Isolierung der Polymerisate den Polymerisationsansatz (z.B. die Emulsion) nach Beendigung der Polymerisation mit einer Base versetzen und dann längere Zeit auf 30°C bis 95°C, vorzugsweise 50 bis 90°C, z.B. 3 Stunden bis 3 Tage, borzugsweise 12 bis 24 Stunden lang erhitzen und danach die Polymerisate durch Koagulation oder Fällung isolieren. Geeignete Basen sind Alkalimetallhydroxide, beispielsweise Kaliumhydroxid, Natriumhydroxid, Ammoniumhydroxid, quatäre Ammonium-Basen, beispielsweise Tetramethylammoniumhydroxid, Benzyltrimethylammoniuhydroxid und wasserlösliche Amine, beispielsweise Methylamin, Ethylamin, Dimethylamin, Diethylamin, Benzylmethylamin.

Als Polyamid-Komponente A) der erfindungsgemäßen Formmassen eignen sich alle teilkristallinen Polyamide, insbesondere Polyamid-6, Polyamid-6,6, ihre Mischungen und teilkristalline Copolyamide auf Basis dieser beiden Komponenten. Weiterhin kommen teilkristalline Polyamide in Betracht, deren Säurekomponente insbesondere ganz oder teilweise (neben Adipinsäure bzw. Caprolactam) aus Terephthalsäure und/oder Isophthalsäure und/oder Kork und/oder Azelainsäure und/oder Dodecandicarbonsäure und/oder Adipinsäure und/oder einer Cyclohexandicarbonsäure besteht, und deren Diaminkomponente ganz oder teilweise insbesondere aus m- und/oder p-Xylylendiamin und/oder Hexamethylendiamin und/oder 2,2,4- und/oder 2,4,4-Trimethylhexamethylendiamin und/oder Isophorondiamin besteht, und deren Zusammensetzung aus dem Stand der Technik bekannt sind.

Außerdem sind teilkristalline Polyamide zu nennen, die ganz oder teilweise aus Lactamen mit 6 bis 12 C-Atomen, gegebenenfalls unter Mitverwendung einer oder mehrerer der oben genannten Ausgangskomponenten, hergestellt werden.

Besonders bevorzugte teilkristalline Polyamide A) sind Polyamid-6 und Polyamid-6,6, ihre Mischungen oder Copolyamide mit nur geringen Anteilen (bis etwa 10 Gew.-%) der Cokomponenten.

Es können als Polyamidkomponente A) auch amorphe Polyamide eingesetzt werden. Sie werden erhalten durch Polykondensation von Diaminen, beispielsweise Ethylendiamin, Hexamethylendiamin, Decamethylendiamin, 2,2,4- und/oder 2,4,4-Trimethylhexamethylendiamin, m-und/oder p-Xylylendiamin, Bis-(4-aminocyclohexyl)-methan, oder Gemischen aus 4,4'- oder 2,2'-Diaminodicyclohexylmethanene, 2,2-Bis-(4-aminocyclohexyl)-propan, 3,3'-Dimethyl-4,4'-diamino-dicyclohexyl-methan, 3-Aminoethyl-3,5,5-trimethylcyclohexylamin, 2,5- und-/oder 2,6-Bis-(aminomethyl)-norbornan und/oder 1,4-Diamino-methylcyclohexan, mit Dicarbonsäuren, beispielsweise Oxalsäure, Adipinsäure, Azelainsäure, Decandicarbonsäure, Heptadecandicarbonsäure, 2,2,4- und/oder 2,4,4-Trimethyladipinsäure, Isophthalsäure oder geringen Mengen an Terephthalsäure. Selbstverständlich sind auch amorphe Copolymere, die durch Polykondensation mehrerer Monomere erhalten werden, geeignet, ferner solche Copolymere, die unter Zusatz von Aminocarbonsäuren, wie w-Aminocapronsäure, w-Aminoundecansäure oder w-Aminolaurinsäure oder ihren Lactamen, hergestellt werden.

Besonders geeignete amorphe Polyamide sind die Polyamide, hergestellt aus Isophthalsäure, Hexamethylendiamin und weiteren Diamininen wie 4,4'-Diaminodicyclohexylmethan, Isophorondiamin, 2,2,4-und/oder 2,4,4-Trimethylhexamethylendiamin, 2,5-und/oder 2,6-Bis-(aminomethyl)-norbornan; oder aus Isophthalsäure, 4,4'-Diamino-dicyclohexylmethan und w-Caprolactam; oder aus Isophthalsäure, 3,3'-Dimethyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der stellungssisomeren Diaminodecyclohexylmethane eingesetzt werden, die sich zusammensetzen aus

70 bis 99 Mol.-% des 4,4'-Diaminoisomeren,
1 bis 30 Mol.-% des 2,4'-Diaminoisomeren,
0 bis 2 Mol.-% des 2,2'-Diaminoisomeren
und gegebenenfalls entsprechend höherkondensierten Diaminen, die durch Hydrierung von Diaminodiphenylmethan entsprechenden Isomerengehaltes erhalten werden.

Die Polyamide A) können auch aus Mischungen von teilkristallinen und amorphen Polyamiden bestehen, wobei vorzugsweise der amorphe Polyamidanteil kleiner als der teilkristalline Polyamidanteil ist.

Bevorzugt sind teilkristalline Polyamide auf Basis Polyamid-6, Polyamid-6,6 und teilkristalline Polyamide auf Basis dieser Hauptkomponenten unter Zusatz von Cokomponenten der erwähnten Art.

Die Polyamide A) sollen bevorzugt eine relative Viskosität (gemessen in einer 1 gew.-%igen Lösung in m-Kresol bei 25°C) von 2,0 bis 5,0, bevorzugt von 2,5 bis 4,0 aufweisen.

Auch übliche Additive wie Gleit- und Entformungsmittel, Nukleierungsmittel, Stabilisatoren, Füll- und Verstärkungsstoffe, Flammschutzmittel, Farbstoffe, Pigmente sowie Thermostabilisatoren, Antioxidantien und/oder Lichtschutzmittel können den erfindungsgemäßen Formmassen auf Basis A) + B) zugesetzt werden.

Die Herstellung der erfindungsgemäßen Formmassen kann durch Vermischen der Komponenten in üblichen Mischaggregaten wie Walzen, Knetern, Ein- oder Mehrwellenextrudern erfolgen.

Die Temperatur bei der Herstellung der Mischungen sollten mindestens 10°C und zweckmäßig höchstens 80°C oberhalb des Schmelzpunktes bzw. Erweichungspunktes, bei nichtkristallinen Materialien der Komponente mit der höchsten Schmelz- bzw. Erweichungstemperatur liegen. Entsprechend dem Eigenschaftsbild eignen sich die erfindungsgemäßen Formmassen überall im Spritzguß- und Extrusionssektor dort, wo die beschriebenen Eigenschaften gefordert werde, wie z.B. im Kfz-Bereich (Stoßfänger), in der Elektrotechnik, im Maschinenbau oder Bausektor.

Beispiele

1. Ausgangsverbindungen

1.1 Komponente A:

Polyamid 6 mit einer relativen Viskosität von 3.0 (gemessen in einer 1 Gew. %igen Lösung in m-Kresol bei 25°C).

1.2 Komponente B:

Vinylmonomerpolymerisat aus Struktureinheiten der Formel (Ia)

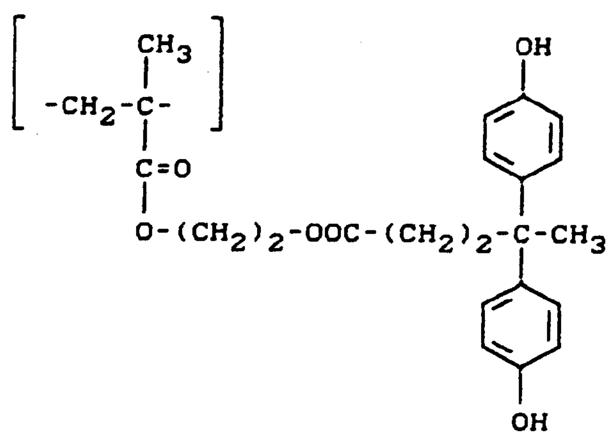

(Ia)

L1,5

Herstellung des Vinylmonomerpolymerisats

Zur Herstellung verwendetes Monomer der Formel (IIa)

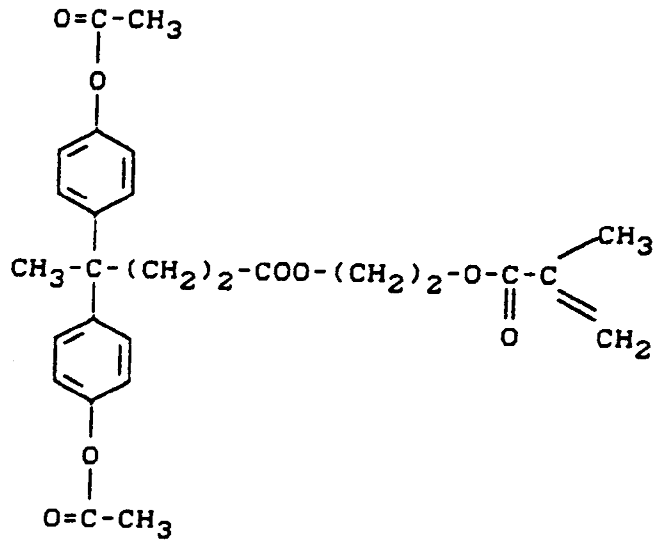

(IIa)

20 Gew.-Teile des Monomers der Formel (IIa) werden in einer Lösung von 0,4 Gew.-Teilen Natriumsalz von $C_{14}$-$C_{18}$-Alkylsulfonsäuren in 45 Gew.-Teilen Wasser emulgiert, mit 0,1 Gew.-Teilen tert.-Dodecylmercaptan versetzt und die Emulsion auf 75°C erhitzt. Nach Zugabe von 0,09 Gew.-Tl. Kaliumperoxodisulfat wird 10 Stunden bei 75°C gerührt. Es wird ein Latex mit einem Feststoffgehalt von 30 % erhalten.

50 Gew.-Teile der Emulsion (Feststoffgehalt: 30 %) werden mit 6 Gew.-Teilen konzentrierter wäßriger Ammoniak-Lösung (25 %ig) versetzt, mit 70 Gew.-Teilen Wasser verdünnt und 18 Stunden bei 70°C gerührt. Anschließend wird die Reaktionsmischung mit verdünnter wäßriger Salzsäure auf pH = 3 gestellt, der ausgefallene Feststoff abfiltriert, mit Wasser gewaschen und getrocknet. Ausbeute: 11 Gew.-Teile (90 %).

IR (KBr): ν= 3650-3100, 3000, 1740, 1620, 1600, 1510, 1440, 1240, 1180, 840 $cm^{-1}$.

2. Mischungen aus der Komponente A und Komponente B (erfindungsgemäß)

Zur Herstellung der Mischungen werden die Komponenten in den in der Tabelle angegebenen Gewichtsverhältnissen in m-Kresol gelöst (5 Gew. %ige Lösung). Aus den Lösungen werden Filme gegossen (500 µm naß) und diese bis zur Gewichtskonstanz bei 80°C im Vakuum (1 mbar) getrocknet.

Die so hergestellten Mischungen werden differentialkalorimetrisch untersucht mit einer Aufheizung bis 240°C. Angegeben sind in der Tabelle die Lage der Glas- und Schmelzübergänge der Mischungen.

Tabelle: Glas- und Schmelzübergänge der Polyamid 6-Vinylmonomerpolymerisat-Mischungen

| Beispiele | Zusammensetzung in Gew. % Komponente A Polyamid | Komponente B Vinylmonomerpolymerisat | $T_G$ in °C | $T_M$ in °C |
|---|---|---|---|---|
| 2.1 | - | 100 | 106 | - |
| 2.2 | 20 | 80 | 89 | - |
| 2.3 | 40 | 60 | 89 | 200 |
| 2.4 | 60 | 40 | 88 | 215 |
| 2.5 | 80 | 20 | 87 | 220 |
| 2.6 (Vergleich) | 100 | - | 50 | 220 |

$T_G$: Glastemperatur / $T_M$: Schmelztemperatur

Aus der Lage der Glastemperatur und der Abwesenheit eines Schmelzüberganges der Mischung läßt sich deutlich erkennen, daß 20 Gew. % Polyamid 6 mit dem Vinylmonomerpolymerisat B vollverträglich sind. Eine weitere Zugabe von Polyamid 6 führt zu einer Teilentmischung aufgrund der Kristallisation eines Teils des Polyamids 6 (Beispiele 2.3-2.5). Die amorphe Phase der Mischungen der Beispiele 2.3-2.5 ist jedoch wiederum homogen gemischt und enthält annähernd die gleiche Menge des Vinylmonomerpolymerisats B, was der ähnlichen Lage des Glasüberganges zu entnehmen ist (T ~ 88°C).

Der Zusatz des Vinylmonomerpolymerisats B führt dennoch zu einer deutlichen Erhöhung der Glastemperatur der amorphen Phase des Polyamid 6 (siehe Beispiele 2.2-2.5 im Vergleich zum Beispiel 2.6).

## Patentansprüche

1. Verträgliche Polymermischungen enthaltend
   A) 10 - 99 Gew.-Tl., vorzugsweise 20 - 95 Gew.-Tl. eines thermoplastischen Polyamids und
   B) 1 - 90 Gew.-Tl., vorzugsweise 5 - 80 Gew.-Tl. eines Vinylmonomerpolymerisats, enthaltend Struktureinheiten der Formel (I)

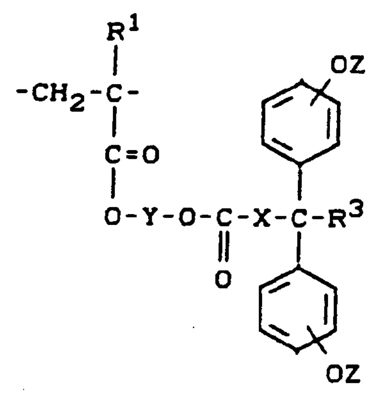

(I),

worin

$R^1$ = Wasserstoff, $C_1$-$C_4$-Alkyl,
$R^2$ = $C_1$-$C_{12}$-Alkyl,
$R^3$ = $C_1$-$C_{12}$-Alkyl,

X = $C_1$-$C_{12}$-Alkylen,
Y = $C_1$-$C_{12}$-Alkylen,
Z = Wasserstoff,

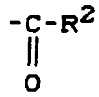

bedeuten.

## Claims

1. Compatible polymer mixtures of
   A) 10 to 90 parts by weight and preferably 20 to 95 parts by weight of a thermoplastic polyamide and
   B) 1 to 90 parts by weight and preferably 5 to 80 parts by weight of a vinyl monomer polymer containing structural units corresponding to formula (I)

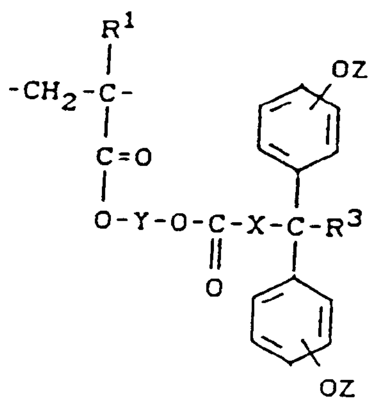

(I),

in which
$R^1$ = hydrogen, $C_{1-4}$ alkyl,
$R^2$ = $C_{1-12}$ alkyl,
$R^3$ = $C_{1-12}$ alkyl,
X = $C_{1-12}$ alkylene,
Y = $C_{1-12}$ alkylene,
Z = hydrogen

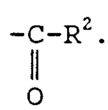

## Revendications

1. Mélanges de polymères compatibles contenant
   A) 10-99 parties en masse, de préférence 20-95 parties en masse, d'un polyamide thermoplastique et
   B) 1-90 parties en masse, de préférence 5-80 parties en masse, d'un polymère de monomère vinylique, contenant des unités constitutives de formule (I)

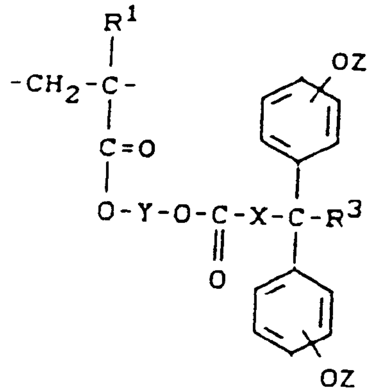

(I),

dans laquelle

$R^1$ = hydrogène, alkyle en $C_1$-$C_4$,

$R^2$ = alkyle en $C_1$-$C_{12}$,

$R^3$ = alkyle en $C_1$-$C_{12}$,

X = alkylène en $C_1$-$C_{12}$,

Y = alkylène en $C_1$-$C_{12}$,

Z = hydrogène,